# EUROPÄISCHE PATENTANMELDUNG

(11) **EP 3 981 257 A1**
(43) Veröffentlichungstag der Anmeldung: **13.04.2022**
(21) Anmeldenummer: 21201450.0
(22) Anmeldetag: 07.10.2021
(51) Int. Cl.: A23C 11/10, A23C 20/02, A23J 1/14, A23J 3/14, A23J 3/22, A23L 33/185

(54) **VERFAHREN ZUR HERSTELLUNG EINER FÜR LEBENSMITTELPRODUKTE NUTZBAREN EMULSION AUS LINSENSAMEN SOWIE DAMIT ERHALTENE EMULSION**

(30) Priorität: 09.10.2020 DE 102020126578; 18.02.2021 DE 102021103835
(71) Anmelder: Fraunhofer-Gesellschaft zur Förderung der angewandten Forschung e.V., 80686 München (DE)
(72) Erfinder: Hickisch, Andrea, 85354 Freising (DE); Schädle, Christopher, 85354 Freising (DE); Weisz, Ute, 85354 Freising (DE); Osen, Raffael, 85354 Freising (DE); Bickel Haase, Thomas, 85354 Freising (DE); Hillreiner, Maria, 85354 Freising (DE); Maus, Marcus, 36088 Hünfeld-Dammersbach (DE)
(74) Vertreter: Gagel, Roland

(57) **Zusammenfassung**

Die vorliegende Erfindung betrifft ein Verfahren zur Herstellung einer für Lebensmittelprodukte nutzbaren Emulsion aus Linsensamen, bei dem geschälte oder ungeschälte Linsensamen zunächst einer Vorbehandlung unterzogen werden, bei der unerwünschte farbige und aromaintensive Stoffe extrahiert und die Linsensamen zerkleinert werden. Die vorbehandelten Linsensamen werden anschließend mit Wasser vermischt und verrührt, das durch Zugabe einer für Verwendung in Lebensmitteln geeigneten Substanz auf einen pH-Wert zwischen 6 und 9 eingestellt wird. Nach Zugabe von Fett, Salz und Zucker wird das Gemisch durch mechanischen Eintrag zur Erzeugung einer Emulsion geschert. Das Verfahren ist einfach durchführbar, kommt ohne separate Isolation und Trocknung von Stärke und Proteinen aus und führt zu einem sensorisch ansprechenden Produkt.

## Beschreibung

Die vorliegende Erfindung betrifft ein Verfahren zur Herstellung einer für Lebensmittelprodukte nutzbaren Emulsion aus Linsensamen, eine untexturierte und eine texturierte Emulsion, die mit dem Verfahren herstellbar sind, sowie mögliche Verwendungen der Emulsion.

Das Interesse der Verbraucher an vegetarischen oder veganen Produkten ist in den letzten Jahren stetig angestiegen. Gesundheitliche Einschränkungen wie Laktoseintoleranz oder Allergien, ethische Vorbehalte oder der Wunsch nach einer nachhaltigeren Lebensweise, führen bei vielen Verbrauchern zu einer Ernährungsweise, aus denen Produkte tierischen Ursprungs ausgeschlossen werden. Dies führt zunehmend dazu, dass die Anzahl an Produkten auf Basis pflanzlicher Proteine in den letzten Jahren deutlich zugenommen hat, insbesondere im Bereich pflanzlicher Fleisch- und Milchproduktalternativen. Derartige Produkte weisen oft ein sehr langes Zutatenverzeichnis oder Defizite im Geschmack auf (Mäkinen et al., 2016. Foods for special dietary needs: Non-dairy plant-based milk substitutes and fermented dairy-type products. Critical Reviews in Food Science and Nutrition 56, 339-349).

Die Herstellung dieser Produkte ist vielfältig, der Anfang der Produktion beruht jedoch meist auf einer sehr ähnlichen Aufarbeitung der Rohstoffe. Für die Herstellung von käse- oder fleischähnlichen Produkten werden meist Proteinisolate, Proteinkonzentrate oder auch die ganze Saat herangezogen. Der Einsatz von Proteinkonzentraten oder der ganzen Saat, wie im Fall von Sojadrinks, ist jedoch aufgrund von sensorisch nachteiligen Attributen (z.B. bitter, adstringierend) sehr limitiert (Debruyne, I., 2006. Soy base extract: soymilk and dairy alternatives. Soy applications in food, 111-132;
Kwok, K.-C. et al., 1995. Review: Effect of thermal processing on soymilk. International Journal of Food Science & Technology 30, 263-295; Nelson, A.I. et al., 1976. Illinois process for preparation of soymilk. Journal of Food Science 41, 57-61).

Die Herstellung von Proteinisolaten ist sehr aufwändig und teuer. Für die Isolierung pflanzlicher Proteine aus Proteinsaaten, wie z.B. der Linse oder der Erbse, wird die Saat zunächst geschält und zu Mehl oder Flocken verarbeitet. Diese vorzerkleinerte Masse wird dann in der Regel in Wasser im sauren Bereich vorextrahiert, um unangenehme Geschmackskomponenten zu entfernen. Im Anschluss erfolgt eine Proteinextraktion in wässriger, alkalischer Lösung. Die gelösten Proteine werden durch eine Fällung am isoelektrischen Punkt (z.B. pH = 4,5) ausgefällt. Nach der Neutralisation werden die isolierten Proteine getrocknet, so dass ein Proteinisolat mit Proteinkonzentrationen größer 90% entsteht.

Diese Proteinisolate können als Grundlage für die Herstellung von pflanzenbasierten Milchersatzprodukten verwendet werden, indem diese mit Fett und Zucker emulgiert und anschließend mit Mikroorganismen versetzt und fermentiert werden. Damit eine stabile Struktur in Produkten wie Joghurt, Frischkäse oder auch Fleischalternativen erreicht werden kann, werden in der Regel noch eine Vielzahl an Hydrokolloiden zugesetzt, da die gelbildenden Eigenschaften der Proteine meist nicht für eine stabile Struktur in den fertigen Produkten ausreichen. Eine mögliche und viel eingesetzte Zutat ist Stärke. Ähnlich wie bei den Proteinen muss auch die Stärke durch aufwändige Extraktions-, Trenn- und Trocknungsverfahren aufgearbeitet werden.

Es erscheint jedoch widersinnig, dass beide mengenmäßig wichtigen Zutaten - Protein und Stärke - vorab separat isoliert und getrocknet werden, um später bei der Produktherstellung wieder in Wasser vermischt zu werden.

Zur Herstellung von Sojadrinks ist es bekannt, die Sojabohnen zunächst in Wasser einzulegen, welches im Anschluss abgetrennt wird. Danach werden die Bohnen vermahlen und die Ballaststoffe, das sogenannte Okara, wird mit einem Sieb abgetrennt (EP0923303A1). Ein Extraktionsschritt, bei dem wertvolle Inhaltsstoffe, wie Proteine und Stärke in Lösung gehen, ist dabei nicht vorgesehen. Auch in der CN107691654A wird ein Prozess beschrieben, bei dem eingeweichte Sojabohnen zerkleinert, erhitzt und gekühlt werden, um anschließend als Milch- oder durch Fermentation zu Joghurtalternativen weiterverarbeitet werden zu können. Eine Abtrennung des Einweichwassers, zur Abtrennung der aroma- und farbaktiven Substanzen ist jedoch nicht beschrieben. Außerdem werden die vermahlenen Sojabohnen nicht extrahiert, wodurch die Proteine nicht in Lösung gehen können und die Stärke nicht vorquellen kann, was eine anschließende Verkleisterung schwierig macht. In weiteren Schriften nach Stand der Technik werden die trockenen Rohstoffe zuerst vermahlen und dann schließen sich weitere Prozessschritte an, wie bspw. in der EP2604127A3, der US3950544A und der CN108185013A für Soja, sowie in der CA2982280A für weitere Leguminosen beschrieben. Die unvermahlenen Saaten werden hier allerdings nicht vorbehandelt, wodurch unerwünschte pflanzentypische aroma- und farbaktive Substanzen nicht abgetrennt werden können und im Endprodukt verbleiben. In der US2003031776A wird beschrieben, wie Erbsen- und Linsenmehle für die Herstellung von Milchersatzprodukten eingesetzt werden, da diese Mehle gute Verkleisterungs- und Koagulationseigenschaften aufweisen. Die Abtrennung von aroma- und farbaktiven Substanzen ist auch hier nicht vorgesehen, was sensorische Defizite der Endprodukte vermuten lässt.

In der GB157351A werden ganze Sojabohnen erst sauer eingelegt, danach alkalisch extrahiert und dann vermahlen, um pflanzliche Milch herzustellen, und anschließend fermentiert.

In der US2016192682A wird die Herstellung einer Linsenmilch offenbart, die durch die Fermentation mit probiotischen Kulturen zu einem probiotischen Joghurt weiterverarbeitet wird. Allerdings kann der Schrift nicht entnommen werden, wie die Milch hergestellt wird. In der DE2406600 wird ebenfalls die ganze Saat (Sojabohnen) verwendet, diese geschält oder ungeschält eingeweicht, das restliche Einweichwasser entfernt und anschließend mit heißem Wasser püriert. Aus dem Püree werden die faserigen Anteile (Okara) entfernt und der Trockensubstanzgehalt wird eingestellt. Nach einer Pasteurisation wird Zucker, (Salz) und Fett zugegeben und emulgiert. Durch Zugabe einer sauren Käsekultur-Suspension wird die Emulsion abgesäuert und kann anschließend fermentiert und zum Endprodukt weiterverarbeitet werden.

Der Stand der Technik bei der Texturierung von Pflanzenproteinen zu Milch- oder Fleischersatzprodukten umfasst hauptsächlich Verfahren der Extrusion (Nass- bzw. Trockenextrusion) wie z.B. in der EP2835058A1 oder der EP1279340B1 beschrieben. Andere Veröffentlichungen verwenden zur Strukturgebung Transglutaminase (EP3122192A1).

Die Aufgabe der vorliegenden Erfindung besteht darin, ein Verfahren zur Herstellung einer für Lebensmittelprodukte nutzbaren Emulsion aus Linsensamen anzugeben, das sich für die Herstellung von Molkereiprodukt- und Fleischalternativen eignet, ohne aufwändige Arbeitsschritte auskommt, insbesondere keine separate Isolation und Trocknung von Stärke und Proteinen aus den Linsensamen erfordert, und sensorisch ansprechend ist.

### Beschreibung der Erfindung

Die Aufgabe wird mit dem Verfahren nach Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen. Mit dem Verfahren herstellbare texturierte und untexturierte Emulsionen sowie unterschiedliche Verwendungen der Emulsionen sind in den Patentansprüchen 18 bis 21 angegeben.

Die vorliegende Erfindung beschreibt die Herstellung einer für Lebensmittelprodukte nutzbaren Emulsion aus Linsensamen, einem stärke- und proteinreichen Rohstoff. Bei dem Verfahren werden geschälte oder ungeschälte Linsensamen zunächst einer Vorbehandlung unterzogen, bei der unerwünschte farbige und aromaintensive Stoffe extrahiert werden. Bei dieser Vorbehandlung werden die Linsensamen in einem neutralen oder sauren wässrigen Medium für einen Zeitraum eingelegt und/oder zerkleinert und einer sauren Vorextraktion unterzogen und/oder erhitzt, und anschließend wieder von dem wässrigen Medium getrennt. Die auf diese Weise vorbehandelten Linsensamen werden anschließend mit Wasser vermischt und verrührt, das durch Zugabe einer für Verwendung in Lebensmitteln geeigneten Substanz, bspw. NaOH, auf einen pH-Wert zwischen 6 und 9 eingestellt wird. Dadurch geht ein Großteil der in den Linsen enthaltenen Proteine in Lösung. Die vorbehandelten Linsensamen werden dabei entweder vor der Wasserzugabe oder nach der Wasserzugabe und vor der Einstellung des pH-Wertes noch zerkleinert, falls sie nicht schon vor der sauren Vorextraktion ausreichend zerkleinert wurden. Anschließend werden Fett und optional Zucker (oder Süßungsmittel) zugegeben. Alternativ kann nur Fett zugegeben und Zucker durch eine partielle Stärkehydrolyse, insbesondere eine enzymatische Hydrolyse durch Zugabe geeigneter Enzyme, aus der Stärke erzeugt werden, die in den vorbehandelten Linsensamen enthalten ist. Das dadurch erhaltene Gemisch wird dann durch mechanischen Eintrag zur Erzeugung einer Emulsion geschert. Diese Emulsion wird im Folgenden auch als Basisemulsion bezeichnet.

Aus dieser Basisemulsion kann dann durch weitere Verarbeitung unter Zugabe von Hydrokolloiden eine Emulsion mit faserartiger Struktur erzeugt werden, im Folgenden auch als texturierte Emulsion bezeichnet, die z.B. zu entsprechend texturierten Fleisch- und Milchproduktalternativen weiterverarbeitet werden kann.

Es hat sich überraschenderweise gezeigt, dass für die Herstellung dieser für Lebensmittelprodukte nutzbaren Emulsionen nicht vorher aufwändig Protein und Stärke der eingesetzten Rohstoffe isoliert und aufgereinigt werden müssen, sondern dass durch die Vorbehandlung mit der Zerkleinerung der vorzugsweise vorgeschälten und/oder eingeweichten Linsensamen und dem anschließenden Versetzen mit Wasser, der Hinzugabe von Fett und Zucker eine Emulsion erzeugt werden kann (Basisemulsion), die dann abgesäuert (durch organische Säuren oder durch säurebildenden Bakterien) und mehr oder weniger abgepresst texturiert werden kann. Die Texturierung erfolgt durch Zugabe eines oder mehrerer Hydrokolloide und einer anschließenden Kombination aus mechanischer Scherung und thermischem Energieeintrag, wodurch die Masse eine faserartige Struktur erhält (texturierte Emulsion). Lange und teure getrennte Aufarbeitungsschritte für Protein und Stärke sind bei diesem Verfahren daher nicht erforderlich.

Die Basisemulsion kann beispielsweise direkt zu Trinkmilchalternativen oder nach Ansäuerung zu Joghurt- und Frischkäse-ähnlichen Produkten oder zu Wurstalternativen weiterverarbeitet werden. Die Emulsion, die mit Hydrokolloiden versetzt wurde und eine thermische Behandlung und Scherung unterlaufen hat (texturierte Emulsion), kann dann als Mozzarella-artiges Produkt und/oder Fleischalternativ-Produkt weiterverarbeitet werden.

Das hier beschriebene Verfahren zeichnet sich u.a. dadurch aus, dass die proteinreichen (3-25 Gew.-%) und stärkereichen (38-78 Gew.-%) geschälten oder ungeschälten Linsensamen für die Herstellung der Basisemulsion und die sich ggf. anschließende Texturierung (texturierte Emulsion) vorbehandelt werden.

Alle %-Angaben in dieser Patentanmeldung beziehen sich auf die Trockensubstanz, soweit nicht explizit anders angegeben.

### Herstellung der Basisemulsion

Für die Vorbehandlung sind drei Verfahrensweisen einzeln oder in Kombination möglich:
1. Einlegen (besonders bevorzugt)
2. Saure Vorextraktion
3. Erhitzen

1. Einlegen: Zum Einweichen der Linsensamen wird die Rohware gewaschen und in Wasser vorzugsweise im S:L-Verhältnis (Gewichtsverhältnis Feststoff:Flüssigkeit) von 1:1 bis 1:8, besonders bevorzugt 1:4, eingelegt, welches eine Temperatur von 0°C bis 50°C hat, bevorzugt 20-40°C. Dem Wasser kann oder können zudem optional Wasserstoffperoxid (H₂O₂) oder verschiedene Säuren zugegeben werden. Das Gewichtsverhältnis von H₂O₂ zu den Linsensamen beträgt bevorzugt 1:12,5, das Gewichtsverhältnis von den Säuren zu den Linsensamen 1:10. Die Rohware wird 30-120 min eingelegt, bevorzugt 60 min und anschließend mehrmals mit Wasser gewaschen. Das Waschwasser wird abgetrennt. Die eingeweichten Linsensamen werden nach dieser Vorbehandlung beispielsweise mit einem Feinstzerkleinerer auf Partikelgrößen von bevorzugt ≤300 µm zerkleinert. Dies kann vor der anschließenden Zugabe von Wasser oder auch nach der Zugabe und vor der Einstellung des pH-Wertes erfolgen.
2. Saure Vorextraktion: Wird die Rohware nicht eingelegt oder erhitzt oder gekocht, kann bei der vorher zerkleinerten Rohware (vorteilhaft Partikelgrößen ≤ 300 µm) eine saure Vorextraktion erfolgen. Hierfür werden die zerkleinerten Linsensamen mit einem Feststoff S:L-Verhältnis von vorzugsweise 1:1 bis 1:8, besonders bevorzugt 1:4 oder 1:3, mit Wasser versetzt. Dieses Wasser wird vorher auf einen pH-Wert im Bereich 3-6, bevorzugt 4-5 angesäuert. Nach einer Rührdauer von 2-60 min bei Raumtemperatur, besonders bevorzugt 10-30 min, wird der saure Überstand abgetrennt und verworfen.
3. Erhitzen: Alternativ zum Einlegen der Linsensamen kann ein Erhitzen oder Kochen der geschälten oder ungeschälten ganzen Saat erfolgen. Hierfür werden die Linsensamen in oben beschriebenen S:L-Verhältnissen (S:L-Verhältnis von vorzugsweise 1:1 bis 1:8, besonders bevorzugt 1:4) bei Temperaturen von 50-150°C für 5 min bis 60 min erhitzt. Das Wasser wird verworfen und die erhitzten Linsensamen nach dieser Vorbehandlung auf Partikelgrößen von bevorzugt ≤ 300 µm zerkleinert. Die Zerkleinerung kann auch erst nach der anschließenden Zugabe von Wasser und vor der Einstellung des pH-Wertes erfolgen.

Den vorbehandelten Linsensamen wird je nach angestrebtem Endprodukt vorzugsweise im S:L-Verhältnis von 1:1 bis 1:8 Wasser zugesetzt. Der pH-Wert wird danach auf pH 6-9, bevorzugt pH 7-8, optimalerweise pH 7,5 eingestellt. Zum Einstellen des pH-Wertes wird eine lebensmitteltaugliche Substanz verwendet wie z. B. NaOH oder CaOH. Mit einer Rührdauer von 1-60 min, besonders bevorzugt 2-30 min, wird nun bei 10-60 °C, besonders bevorzugt 50 °C extrahiert, so dass die Proteine in Lösung gehen.

Anschließend wird Fett, bevorzugt pflanzliche Fette oder Öle, darunter besonders bevorzugt Kokosfett und Rapsöl, in einer Konzentration zwischen 0,5-50 Gew.-%, bevorzugt 2-20 Gew.-%, bezogen auf die Trockensubstanz durch Rühren und Dispergieren hinzugefügt. Zudem kommen 0,01-20 Gew.-% Zucker und optional Salz mit 0,01-3 Gew.-% hinzu. Als Zuckerquelle kann vorzugsweise Saccharose, aber auch Glucose, Fructose, Maltose, Invertzucker oder andere Ein- bis Zweifach-Zucker verwendet werden. Optional kann ein Teil der in der Linse enthaltenen Stärke mittels amylolytischer Enzymaktivitäten zu Zucker abgebaut werden. Optional können auch in der Lebensmittelindustrie verwendete Süßungsmittel zur Einstellung des Süß-Säureverhältnisses eingesetzt werden.

Nach Zugabe von Fett, ggf. Salz und Zucker wird die Mischung intensiv geschert. Dies kann erfolgen mit einem Hochdruckhomogenisator zwischen 100 und 500 bar, besonders bevorzugt zweistufig mit 250 bar und 50 bar, oder optional mit einem Feinstzerkleinerer. Die Partikelgröße befindet sich danach unter 100 µm, bevorzugt unter 50 µm, optimalerweise unter 30 µm.

Die damit erhaltene Basisemulsion kann direkt nach dem Homogenisieren erhitzt und als Trinkmilchalternative verwendet werden.

Alternativ kann die Emulsion noch abgesäuert werden. Die Absäuerung erfolgt entweder über den Zusatz von Säuren, wie z.B. Salzsäure, Citronensäure, Milchsäure, Äpfelsäure, GdL oder über die Zugabe säurebildender Mikroorganismen. Im Falle der Zugabe säurebildender Bakterien werden 10⁵-10⁸ Kolonie-bildende Einheiten pro mL (KbE/mL) zu der Basisemulsion hinzugegeben. Besonders bevorzugt 10⁶-10⁷ KbE/mL. Für die Absäuerung können alle Mikroorganismen aus der Gruppe der säurebildenden Bakterien eingesetzt werden, bevorzugt Vertreter der Gattungen Lactobacillaceae sowie Streptococcaceae, besonders bevorzugt vegane Kulturen der Bakterien. Die Fermentation erfolgt bei 20-48 °C, besonders bevorzugt bei 28-35 °C für 0,5-20 h. Durch die Bildung von organischen Säuren darunter v.a. Milchsäure aufgrund der Stoffwechselleistung der säurebildenden Bakterien fällt der pH-Wert von anfangs ca. 7,0-8,0 auf 3,0-6,5, vorzugsweise 4,5-6,0. Durch die Absäuerung denaturiert ein Teil der Proteine, welche dann präzipitieren. Im Falle der Zugabe der Säuren wird eine verdünnte Lösung dieser Säuren zugesetzt, bis der oben beschriebene EndpH-Wert erreicht ist.

Überaschenderweise zeigte sich, dass sich diese Basisemulsion direkt als Milchproduktalternativen, wie z.B. Quark, Joghurt, Frischkäse einsetzen lässt. In diesem Fall wird vor der Fermentation eine thermische Behandlung durchgeführt.

### Herstellung der texturierten Emulsion

Die Basisemulsion lässt sich vorteilhaft durch geeignete Temperaturführung bei gleichzeitigem Schereintrag zu texturierten Produkten verarbeiten (texturierte Emulsion), die sich durch eine schnittfeste, gelartige Struktur auszeichnen (z.B. Wurstersatz, Eiersatz, wie Omlette, Fischersatz, Käsealternativen). Durch Zugabe von Zusatzstoffen, wie z.B. Hydrokolloide lässt sich die Ausprägung der spezifischen, anisotropen Strukturen der Endprodukte noch weiter verstärken.

Die Zugabe der Hydrokolloide kann je nach Endprodukt vor oder nach der Absäuerung erfolgen. Hydrokolloide wie z.B. Xanthan, Guar, Johannisbrotkernmehl, Carrageen, Pektin, Gummi Arabicum, Guarkernmehl, Gellan, Zitrusfaser, Agar Agar, andere Stärken und andere Proteine können einzeln oder in Kombination in Konzentrationen von 0,05 % - 10 Gew.-% z.B. zur Erhöhung der Festigkeit oder zur Strukturgebung zugesetzt werden. Je nach gewünschten Produkteigenschaften, z.B. rührfähige oder streichbare Produkte, kann optional die Zugabe der Hydrokolloiden entfallen.

Anschließend erfolgt eine thermische Behandlung, bei der die Emulsion unter Rühren/Durchmischen auf Temperaturen von 40-160°C, besonders bevorzugt von 80-95°C, vorzugsweise für 2 sec bis 30 min. erhitzt wird.

Nach dem Abkühlen der Masse hat sich überraschenderweise gezeigt, dass durch das beschriebene Verfahren faser- oder schichtartige Strukturen entstehen, die sich während des Abkühlvorgangs noch weiter fixieren. Je nach Zielprodukt lässt sich die texturierte Emulsion (z.B. durch Würzen, Formen) zu Produkten wie z.B. Wurst- oder Fleischersatz wie Hähnchenfleisch, Eiersatz wie Omlette, Fischersatz, Käsealternativen wie Mozzarella, weiterverarbeiten.

Dieses Verfahren kann mit protein- und stärkehaltigen Linsen Spezies und Varietäten durchgeführt werden.

Die Produkte, die aus der Basisemulsion hervorgehen, wie bspw. die Trinkmilchalternative, die Joghurt-, Frischkäse- bzw. Quarkalternative und die Wurstalternative, zeichnen sich durch folgende Charakteristika aus:
- Nahezu alle Bestandteile der ganzen, geschälten Linsensamen
- Einen Stärkeanteil zwischen 15 und 40 Gew.-%, bei der Trinkmilchalternative liegt der Stärkegehalt unter 5% (w/w)
- Einen Proteinanteil zwischen 9 und 20 Gew.-%
- 0,5-50 Gew.-% Fett, wobei es sich vorzugsweise um pflanzliche Fette/Öle handelt
- Wasser
- 0,1-3 Gew.-% Salz
- Zucker zugesetzt oder durch Stärkehydrolyse gewonnen
- Durch eine helle Farbe (L-Wert > 85)
- Optional Milchsäurekulturen, bei der Joghurt-, Frischkäse- bzw. Quarkalternative

Alle %-Werte sind hierbei bezogen auf Trockensubstanz.

Die Produkte, die aus der texturierten Emulsion und damit auch aus der Basisemulsion hervorgehen, wie die Mozzarellaalternative und die Fleischalternative, zeichnen sich durch folgende Charakteristika aus:
- Nahezu alle Bestandteile der ganzen, geschälten oder ungeschälten Linsensamen
- Einen Stärkeanteil zwischen 15 und 40 Gew.-%
- Einen Proteinanteil zwischen 9 und 20 Gew.-%
- 0,5-50 Gew.-% Fett, wobei es sich vorzugsweise um pflanzliche Fette/Öle handelt
- 0,05-10 Gew. % Hydrokolloide, insbesondere Xanthan
- Wasser
- 0,1-3 Gew.-% Salz
- Durch eine helle Farbe (L-Wert > 85)

Die texturierte Emulsion weist dabei eine anisotrope Struktur auf, die durch eine sichtbare faser- oder schichtartige Beschaffenheit gekennzeichnet

Durch die Zugabe von Xanthan ist es insbesondere gelungen, eine faserige Struktur zu generieren, die an die Fasern von Kuhmilchmozzarella und Hähnchenfleisch erinnert.

Alle %-Werte sind hierbei bezogen auf Trockensubstanz.

### Anwendungsbeispiele

### Beispiel 1: Herstellung einer Trinkmilchalternative

Es werden 5 kg der geschälten, gelben Linse mehrmals mit lauwarmem Wasser gewaschen und anschließend in 20 L 40 °C warmen Wasser mit 400 ml Wasserstoffperoxid (H₂O₂) für eine Stunde unter gelegentlichem Rühren eingelegt. Anschließend werden die eingelegten Linsen erneut mehrmals mit Wasser gewaschen. Zusätzlich werden den Linsen 22 L Wasser zugegeben, die Temperatur auf 50 °C erhöht und zu einer feinen Masse zerkleinert (Partikelgröße kleiner 50 µm). Mit 1 molarer Natronlauge wird der pH-Wert der Masse auf pH 7,5 eingestellt und 10 Minuten gerührt.

Für die enzymatische Hydrolyse der Stärke wird die Stärke zunächst verkleistert. Dazu wird die Masse auf 85 °C erhitzt. Parallel zur Verkleisterung findet die Stärkehydrolyse mit hitzestabilen alpha-Amylasen statt (20 g). Diese werden der Masse zugesetzt. Die Temperatur von 85 °C wird unter konstantem Rühren für eine Stunde gehalten. Anschließend wird die Temperatur auf 55 °C abgesenkt und durch die Zugabe von 30 g Glucoamylasen mit der Stärke-Verzuckerung fortgefahren. Dazu wird die Temperatur von 55 °C für 40 Minuten unter konstantem Rühren gehalten. Danach wird die Masse durch ein feines Tuch filtriert, der Filterkuchen wird verworfen. Zur Emulsionsbildung wird der Masse 0,5 kg Rapsöl zugesetzt und mit dem Feinstzerkleinerer oder einem Homogenisator zu einer homogenen Emulsion verarbeitet. Im Anschluss wird die Trinkmilchalternative durch Ultrahocherhitzung haltbar gemacht (140 °C, 15 s).

### Beispiel 2: Herstellung einer Joghurt- und Frischkäse- bzw. Quarkalternative

Herstellung der Joghurtalternative:
Es werden 5 kg der geschälten, gelben Linse mehrmals mit lauwarmem Wasser gewaschen und anschließend in 20 L 40 °C warmen Wasser mit 400 ml Wasserstoffperoxid (H₂O₂) für eine Stunde unter gelegentlichem Rühren eingelegt.
Anschließend werden die eingelegten Linsen erneut mehrmals mit Wasser gewaschen. Den Linsen werden 30 L Wasser zugegeben, die Temperatur auf 50 °C erhöht und zu einer feinen Masse zerkleinert (Partikelgröße kleiner 50 µm). Mit 1 molarer Natronlauge wird der pH-Wert der Masse auf pH 7,5 eingestellt und zwei Minuten gerührt.
Für die Herstellung einer Joghurtalternative werden 600 g Invertzuckersirup, 1,2 kg Kokosfett und 20 g Salz zugegeben. Mit dem Feinstzerkleinerer oder Homogenisator wird alles zu einer homogenen Basisemulsion verarbeitet.
Anschließend wird die Basisemulsion auf 90 °C unter Rühren aufgeheizt und 3 min auf der Temperatur gehalten.
Danach wird die Basisemulsion auf Fermentationstemperatur von bspw. 40°C abgekühlt, mit veganen Milchsäurebakterien angeimpft und bis zu einem pH von 4,5 fermentiert. Danach wird die Joghurtalternative für mindestens 24 Stunden kühl gelagert und anschließend optional gerührt. Statt der Zugabe des Invertzuckers kann nach dem Erhitzungsschritt eine partielle enzymatische Stärkehydrolyse erfolgen wie bei dem Anwendungsbeispiel 1 beschrieben. Dies gilt auch für die nachfolgenden Anwendungsbeispiele.

Herstellung einer Frischkäse- bzw. Quarkalternative: Zunächst werden 15 kg Linsen mehrmals im Sieb mit lauwarmen Leitungswasser gewaschen. Die gewaschenen Linsen werden mit 70 L Wasser (40 °C) und 1.200 mL H₂O₂ in eine Wanne gegeben und eine Stunde bei gelegentlichem Rühren einlegt. Nach einer Stunde wird das Wasser abgegossen. Die Linsen werden mehrmals mit Wasser gewaschen.

Zu den gewaschenen und eingelegten Linsen werden 52 L Wasser zugesetzt. Die Linsen werden bei 50 °C zerkleinert (Partikelgröße kleiner 50 µm). Danach wird der pH-Wert auf 7,5 mit 1 M Natronlauge eingestellt. Im Anschluss werden 440 g Invertzuckersirup, 3,3 kg Kokosfett (Palmin) und 1 kg Salz zugegeben und zu einer homogenen Basisemulsion verarbeitet.

Die homogene Basisemulsion wird auf 103 °C erhitzt und 3 min heiß gehalten. Im Anschluss wird die homogene Basisemulsion auf 40 °C abkühlt.

Die homogene Basisemulsion wird mit veganen Starterkulturen angeimpft und bei 40 °C unter ständigem Rühren fermentiert bis ein pH-Wert von ca. 5 erreicht wird. Danach wird die fermentierte Masse in geeigneten Behältern abfüllt und herunter gekühlt.

### Beispiel 3: Herstellung einer Mozzarella-artigen Struktur

Es werden 5 kg der geschälten, gelben Linse mehrmals mit lauwarmem Wasser gewaschen und anschließend in 20 L 40 °C warmen Wasser mit 400 ml Wasserstoffperoxid (H₂O₂) für eine Stunde unter gelegentlichem Rühren eingelegt. Anschließend werden die eingelegten Linsen erneut mehrmals mit Wasser gewaschen. Den Linsen werden 6,4 L Wasser zugegeben, die Temperatur auf 50 °C erhöht und mit einem Feinstzerkleinerer zu einer feinen Masse zerkleinert (Partikelgröße kleiner 50 µm). Mit 1 molarer Natronlauge wird der pH-Wert der Masse auf pH 7,5 eingestellt und zwei Minuten gerührt.

Anschließend werden 264 g Invertzuckersirup, 3,3 kg Kokosfett und 250 g Salz zugegeben. Mit einem Feinstzerkleinerer oder einem Homogenisator wird alles zu einer homogenen Basisemulsion verarbeitet. Mit 1 molarer Salzsäure wird der pH-Wert auf pH 6,0 abgesenkt. Der Basisemulsion wird nun erneut 4,8 L Wasser sowie 400 g Xanthan, 200 g Citrusfasern und 10 g κ-Carrageenan zugegeben und alles gut durchmischt. Anschließend wird die Hydrokolloid enthaltene Emulsion auf 90 °C unter Rühren aufgeheizt und 3 min auf der Temperatur gehalten. Die Hydrokolloid enthaltene Emulsion wird nun heiß abgefüllt. Die Abfüllung kann in geeignete Behälter zur Formgebung wie Becher oder Wurstdärmen erfolgen. Das im Wurstdarm abgefüllte Produkt kann nach dem Erkalten noch geschnitten werden.

### Beispiel 4: Linse für die Herstellung von Fleischalternativen

Es werden 18 kg der geschälten, gelben Linse mehrmals mit lauwarmem Wasser gewaschen und anschließend in 70 L 40 °C warmen Wasser mit 1,5 L Wasserstoffperoxid (H₂O₂) für eine Stunde unter gelegentlichem Rühren eingelegt. Anschließend werden die eingelegten Linsen erneut mehrmals mit Wasser gewaschen. Den Linsen werden 17,5 L Wasser zugegeben, die Temperatur auf 50 °C erhöht und zu einer feinen Masse zerkleinert (Partikelgröße kleiner 50 µm). Mit 1 molarer Natronlaufe wird der pH-Wert der Masse auf pH 7,5 eingestellt und zwei Minuten gerührt. Anschließend werden 530 g Invertzuckersirup, 12 kg Kokosfett und 1,2 kg Salz zugegeben. Mit dem Feinstzerkleinerer oder dem Homogenisator wird alles zu einer homogenen Basisemulsion verarbeitet. Mit 1 molarer Salzsäure wird der pH-Wert auf pH 6,0 abgesenkt. Der homogenen Basisemulsion wird nun erneut 18,5 L Wasser sowie 1,0 kg Xanthan und 1,6 g Gellan zugegeben und alles gut durchmischt. Anschließend wird die Hydrokolloid enthaltende Basisemulsion auf 90 °C unter Rühren aufgeheizt und 3 min auf der Temperatur gehalten und im Anschluss heiß abgefüllt. Die Abfüllung erfolgt wie im Anwendungsbeispiel 3 beschrieben.

### Beispiel 5: Linse für die Herstellung von Wurstalternativen

Es werden 24 kg Linsen mehrmals im Sieb mit lauwarmen Leitungswasser gewaschen. Die gewaschenen Linsen werden mit 70 L Wasser (40 °C) und 1,9 L H₂O₂ in eine Wanne gegeben und eine Stunde bei gelegentlichem Rühren einlegt. Nach einer Stunde wird das Wasser abgegossen. Die Linsen werden mehrmals mit Wasser gewaschen.

Zu den gewaschenen und eingelegten Linsen werden 24 L Wasser zugesetzt. Die Linsen werden bei 50 °C zerkleinert. Im Anschluss wird der pH-Wert auf pH 7,5 mit 1 M Natronlauge eingestellt. Danach werden 700 g Invertzuckersirup, 15,8 kg Kokosfett und 1,7 kg Salz zugeben und zu einer homogenen Basisemulsion homogenisiert. Anschließend wird der pH-Wert mit 1 M Salzsäure auf pH 6,0 einstellt.

Die homogene Basisemulsion wird auf 90 °C erhitzt und für 3 min heiß gehalten. Im Anschluss wird die Masse in Wannen oder Wurstdärme abfüllt.

Nachfolgend werden die Bestimmungsverfahren kurz beschrieben, die zur quantitativen Bestimmung der in der vorliegenden Patentanmeldung angegebenen Werte genutzt werden:
- Proteingehalt: Der Proteingehalt ist definiert als der Gehalt, der sich aus der Bestimmung des Stickstoffs in einer Probe und der Multiplikation des ermittelten Wertes mit dem Faktor 6,25 errechnet. Der Proteingehalt ist in der vorliegenden Patentanmeldung in Prozent bezogen auf die Trockenmasse (TS) angegeben.
- Farbe:
   Die wahrnehmbare Farbe ist mittels CIE-L*a*b*-Farbmessung definiert (vgl. DIN 6417). Dabei gibt die L*-Achse mit dem L-Wert die Helligkeit an, wobei Schwarz den Wert 0 und Weiß den Wert 100 hat.
- Fettgehalt: Der Fettgehalt wird gravimetrisch mit der Sohxlet-Methode bestimmt, bei der das Probenmaterial mindestens sechs Stunden lang wiederholt mit einem organischen Lösungsmittel (Hexan oder Petrolether) in Kontakt gebracht wird. Das extrahierte Öl wird nach Verdampfen des Lösungsmittels gemessen.
- Stärkeanteil: Nach einer mechanischen Zerkleinerung der Proben werden diese mit von HCl und DMSO inkubiert, um die Stärke in eine lösliche Form zu überführen. Für die enzymatische Bestimmung wird der pH-Wert der Probe auf einen Wert zwischen 4 und 5 eingestellt, die Probe auf ein definiertes Volumen aufgefüllt und ggf. filtriert.

Durch die enzymatische Spaltung der Stärke mit Hilfe des Enzyms Amyloglucosidase entsteht D-Glucose, die nach der Phosphorylierung durch Hexokinase durch NADP oxidiert wird. Das dabei entstehende NADPH wird photometrisch bei 365 nm bestimmt. Die während der Reaktion gebildete NADPH-Menge ist der durch Hydrolyse der Stärke gebildeten D-Glucose-Menge proportional.

Sind in der Probe freie D-Glucose oder Glucose-haltige Di- oder Oligosaccharide vorhanden, sind diese nach ihrer Extraktion getrennt zu bestimmen.

## Patentansprüche

1. Verfahren zur Herstellung einer für Lebensmittelprodukte nutzbaren Emulsion aus Linsensamen,
bei dem:
- geschälte oder ungeschälte Linsensamen zunächst einer Vorbehandlung unterzogen werden, bei der die Linsensamen in einem neutralen oder sauren wässrigen Medium für einen Zeitraum eingelegt und/oder zerkleinert und einer sauren Vorextraktion unterzogen und/oder erhitzt werden und anschließend wieder von dem wässrigen Medium getrennt werden,
- die vorbehandelten Linsensamen anschließend mit Wasser vermischt und verrührt werden, das durch Zugabe einer für Verwendung in Lebensmitteln geeigneten Substanz auf einen pH-Wert zwischen 6 und 9 eingestellt wird, wobei die vorbehandelten Linsensamen entweder vor dem Vermischen mit dem Wasser oder nach dem Vermischen mit dem Wasser und vor der Einstellung des pH-Wertes zerkleinert werden, falls sie nicht schon vor der sauren Vorextraktion ausreichend zerkleinert wurden,
- Fett zugegeben wird, und
- ein dadurch erhaltenes Gemisch durch mechanischen Eintrag zur Erzeugung einer Emulsion geschert wird.

2. Verfahren nach Anspruch 1,
bei dem den mit Wasser vermischten vorbehandelten Linsensamen auch Zucker oder Süßungsmittel zugegeben wird oder Zucker durch eine partielle Stärkehydrolyse aus Stärke erzeugt wird, die in den vorbehandelten Linsensamen enthalten ist.

3. Verfahren nach Anspruch 1 oder 2,
bei dem die Emulsion durch Zugabe wenigstens einer Säure oder durch Fermentation mittels säurebildender Mikroorganismen abgesäuert und einer Temperaturbehandlung unterzogen wird.

4. Verfahren nach einem der Ansprüche 1 bis 3,
bei dem der Emulsion Hydrokolloide zugegeben werden, um anschließend durch thermische und mechanische Behandlung eine texturierte Emulsion zu erzeugen.

5. Verfahren nach Anspruch 4,
bei dem die thermische und mechanische Behandlung durch Erhitzen der Emulsion mit den Hydrokolloiden unter Rühren auf eine Temperatur zwischen 40° und 160°C, besonders bevorzugt zwischen 80° und 95°C, für einen Zeitraum von 2 Sekunden bis 30 Minuten erfolgt.

6. Verfahren nach einem der Ansprüche 1 bis 5,
bei dem den mit Wasser vermischten vorbehandelten Linsensamen auch Salz zugegeben wird.

7. Verfahren nach einem der Ansprüche 1 bis 6,
bei dem die Linsensamen bei der Vorbehandlung für einen Zeitraum im Bereich von 30 bis 120 Minuten in Wasser eingelegt werden, wobei das Wasser eine Temperatur zwischen 0°C und 50°C, bevorzugt zwischen 20° und 40°C, aufweist.

8. Verfahren nach Anspruch 7,
bei dem Wasserstoffperoxid, vorzugsweise in einem Gewichtsverhältnis des Wasserstoffperoxids zu den Linsensamen von 1:12,5, oder wenigstens eine Säure, bevorzugt in einem Gewichtsverhältnis der Säure zu den Linsensamen von 1:10, oder ein Salz wenigstens einer Säure dem Wasser bei der Vorbehandlung zugesetzt wird.

9. Verfahren nach einem der Ansprüche 1 bis 6, bei dem die Linsensamen bei der Vorbehandlung für einen Zeitraum im Bereich von 5 bis 60 Minuten in Wasser erhitzt oder gekocht werden.

10. Verfahren nach einem der Ansprüche 1 bis 6, bei dem die Linsensamen bei der Vorbehandlung für die saure Vorextraktion zunächst zerkleinert und anschließend für einen Zeitraum im Bereich von 2 bis 60 Minuten in Wasser gerührt werden, das auf einen pH-Wert im Bereich von 3-6 eingestellt wurde.

11. Verfahren nach einem der Ansprüche 1 bis 10, bei dem die Zerkleinerung des Linsensamen auf Partikelgrößen ≤ 300 µm erfolgt.

12. Verfahren nach einem der Ansprüche 1 bis 11, bei dem das Wasser, mit dem die vorbehandelten Linsensamen vermischt und verrührt werden, auf einen pH-Wert zwischen 7 und 8 eingestellt wird.

13. Verfahren nach Anspruch 12,
bei dem das Verrühren der vorbehandelten Linsensamen mit dem Wasser mit einer Rührdauer von 1 bis 60 Minuten bei einer Temperatur des Wassers zwischen 10° und 60 °C, besonders bevorzugt bei 50 °C, erfolgt.

14. Verfahren nach einem der Ansprüche 1 bis 13, bei dem das Fett in einer Konzentration zwischen 0,5-50 Gew.-%, bevorzugt 2-20 Gew.-%, bezogen auf die Trockensubstanz durch Rühren und Dispergieren zugegeben wird.

15. Verfahren nach Anspruch 14,
bei dem pflanzliches Fett, bevorzugt Kokosfett oder Rapsöl, zugegeben wird.

16. Verfahren nach einem der Ansprüche 1 bis 15,
bei dem der Zucker in einer Konzentration von 0,01-20 Gew.-% bezogen auf die Trockensubstanz zugegeben oder erzeugt wird.

17. Verfahren nach einem der Ansprüche 1 bis 16,
bei dem der mechanische Eintrag zur Erzeugung der Emulsion mit einem Hochdruckhomogenisator oder einem Feinstzerkleinerer erfolgt.

18. Emulsion, die aus Linsensamen erhalten ist und wenigstens
- einen Proteinanteil zwischen 9 und 20 Gew.-%,
- einen Stärkeanteil zwischen 15 und 40 Gew.-%,
- 0,5-50 Gew.-% Fett,
- Wasser,
- Salz und Zucker sowie
- eine Helligkeit von > 85 aufweist.

19. Texturierte Emulsion, die aus Linsensamen erhalten ist und wenigstens
- einen Proteinanteil zwischen 9 und 20 Gew.-%,
- einen Stärkeanteil zwischen 15 und 40 Gew.-%,
- 0,5-50 Gew.-% Fett,
- 0,05-10 Gew._%Hydrokolloide, insbesondere Xanthan,
- Wasser,
- Salz und Zucker sowie
- eine Helligkeit von L > 85 aufweist.

20. Texturierte Emulsion, die aus Linsensamen erhalten ist und eine sichtbare faser- oder schichtartige Beschaffenheit aufweist.

21. Verwendung der nach dem Verfahren nach einem oder mehreren der Ansprüche 1 bis 17 erhaltenen Emulsion als Trinkmilchalternative, Joghurtalternative, Frischkäse- oder Quarkalternative, Käsealternative, Omelettalternative, Wurstalternative, Fleischalternative oder Fischalternative.
